# FASCICULE DE BREVET EUROPEEN

(11) **EP 1 864 091 B1**
(45) Date de publication et mention de la délivrance du brevet: **08.11.2017**
(21) Numéro de dépôt: 06709181.9
(22) Date de dépôt: 27.01.2006
(51) Int. Cl.: G01D 13/26, B60K 37/02, G01D 11/28

(54) **DISPOSITIF D'AFFICHAGE À AIGUILLE PIVOTANTE**
ANZEIGEEINRICHTUNG MIT EINEM SCHWENKZEIGER
DISPLAY DEVICE HAVING A PIVOTAL POINTER

(30) Priorité: 11.02.2005 FR 0501385
(43) Date de publication de la demande: 12.12.2007
(73) Titulaire: Johnson Controls Technology Company, Milwaukee, WI 53209 (US)
(72) Inventeur: FOURNIER, Joël, F-95000 Cergy (FR)
(74) Mandataire: Parzy, Benjamin Alain
(86) Numéro de dépôt international: PCT/FR2006/000185
(87) Numéro de publication internationale: WO 2006/084970

(56) Documents cités:
- EP-A- 0 811 827
- DE-A1- 19 537 346
- FR-A- 2 726 363
- US-B1- 6 408 783

## Description

La présente invention concerne un dispositif d'affichage à aiguille pivotante.

### ARRIERE PLAN DE L'INVENTION

On connaît des dispositifs d'affichage comportant une aiguille ayant une orientation variable par pivotement autour d'un axe et portant un organe d'éclairage relié à un connecteur par un ruban flexible fixé le long de l'aiguille.

Afin d'assurer une liaison flexible entre la partie du ruban fixée à l'aiguille et le connecteur fixe, il est connu du document DE 195 37 346 d'enrouler le ruban sous l'aiguille en spirale autour de l'axe de pivotement. Ceci implique de prévoir sous l'aiguille un espace suffisant largement supérieur à la largeur du ruban afin d'éviter un frottement du ruban contre l'aiguille lors de déformations du ruban induites par la torsion résultant du montage en spirale. Ceci implique donc une épaisseur totale importante du dispositif d'affichage. En outre le ruban est replié sur le côté de l'aiguille de sorte que l'effort résistant engendré sur l'aiguille par le ruban dépend de l'orientation de l'aiguille.

On connaît également du document EP 811 827 un mode de réalisation d'un dispositif d'affichage dont le ruban de connexion est relié sur lui-même pour former une boucle ayant une branche reliée à l'aiguille et une branche reliée au connecteur. Dans ce mode de réalisation le ruban flexible est fixé au moyeu de l'aiguille de sorte que l'organe d'éclairage de l'aiguille doit nécessairement être intégré au moyeu.

### OBJET DE L'INVENTION

Un but de l'invention est de proposer un dispositif d'affichage à aiguille pivotante pouvant être réalisé selon une épaisseur réduite tout en ayant une liberté de positionnement de l'organe d'éclairage.

### RESUME DE L'INVENTION

En vue de la réalisation de ce but on propose selon l'invention, un dispositif d'affichage comportant une aiguille ayant une orientation variable par pivotement autour d'un axe et portant un organe d'éclairage relié à un connecteur par un ruban flexible replié sur lui-même pour former une boucle ayant une branche reliée à l'aiguille et une branche reliée au connecteur, le ruban flexible étant fixé le long de l'aiguille, et présentant une portion en coude rabattue sur une extrémité de l'aiguille pour que la portion en coude s'étende dans un même plan que la branche reliée à l'aiguille.

Selon une version avantageuse de l'invention, le connecteur est décalé par rapport à l'aiguille pour que la boucle s'étende toujours d'un même côté de l'aiguille quelle que soit l'orientation de l'aiguille.

### BREVE DESCRIPTION DES DESSINS

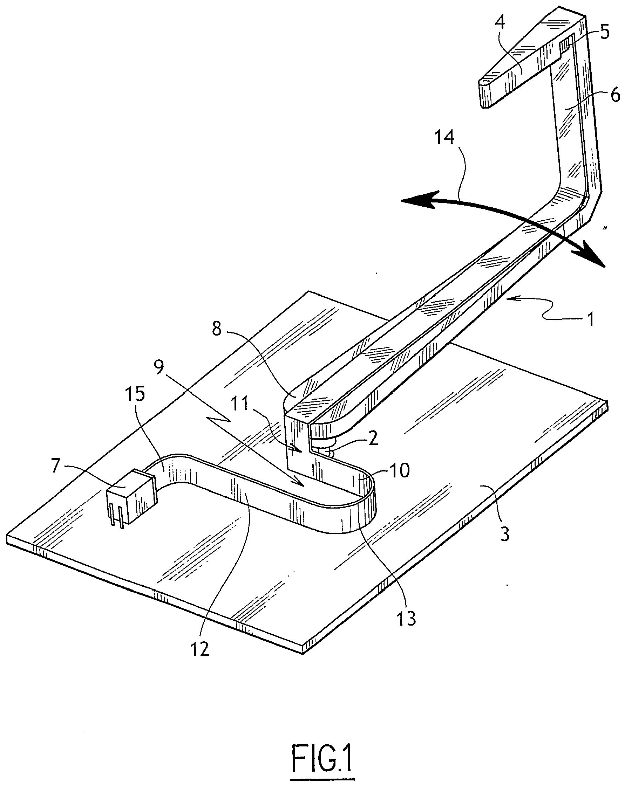

D'autres caractéristiques et avantages de l'invention apparaîtront encore à la lecture de la description qui suit d'un mode de réalisation préféré de l'invention en référence à la figure unique ci-jointe qui est une vue en perspective schématique des éléments essentiels du dispositif d'affichage selon l'invention.

### DESCRIPTION DETAILLEE DE L'INVENTION

En référence à la figure, le dispositif d'affichage illustré comporte de façon connue en soi une aiguille 1 ayant une orientation variable par pivotement sur une plage angulaire d'environ 300° autour d'un axe 2 s'étendant perpendiculairement à l'aiguille 1 au voisinage d'une extrémité de celle-ci et traversant une carte électronique 3 portant un moteur d'entraînement non représenté.

A son extrémité libre, l'aiguille comporte également de façon connue en soi une pointe 4 portant un organe d'éclairage 5 tel qu'une diode électroluminescente reliée à un ruban d'alimentation 6 fixé le long de l'aiguille 1. Le ruban d'alimentation 6 est relié à un connecteur d'alimentation 7 porté par la carte électronique 3.

Selon l'invention, au-delà de l'extrémité 8 de l'aiguille 1 qui est montée pour pivoter autour de l'axe 2, le ruban 6 est replié sur lui-même pour former une boucle en U 9 ayant une branche 10 reliée à l'aiguille par l'intermédiaire d'une portion en coude 11 qui est maintenue rabattue par collage sur l'extrémité de l'aiguille pour que la portion en coude 11 s'étende dans le même plan que la branche 10. A l'opposé de la branche 10, la boucle en U 9 comporte une branche 12 qui est reliée au connecteur 7 en étant repliée vers l'extérieur selon une courbe 15 favorisant le maintien de la boucle selon une forme en U lors du pivotement de l'aiguille.

Dans le mode de réalisation préféré illustré, la portion en coude 11 ainsi que les branches 10 et 12 de la boucle en U et la partie de liaison incurvée 13 de la boucle en U 9 s'étendent parallèlement à l'axe de pivotement 2 afin que lors des mouvements de l'aiguille la boucle se déroule en conservant des génératrices parallèles à l'axe de pivotement. Lors des mouvements de pivotement de l'aiguille 1 autour de l'axe 2, la boucle en U 9 se déforme donc en imposant un minimum de couple à l'aiguille 1.

De préférence, comme illustré sur la figure, le connecteur 7 est non seulement décalé axialement de l'extrémité 8 de l'aiguille 1 sur une distance suffisante pour réaliser la boucle en U 9 sans contrainte de flexion trop importante sur le ruban d'alimentation, mais il est également décalé latéralement sur une distance suffisante par rapport à l'axe de pivotement 2 afin que la boucle en U 9 s'étende toujours d'un même côté de l'aiguille 1 et que le couple résistant au pivotement de l'aiguille soit sensiblement constant quelle que soit l'orientation de l'aiguille 1 lors de ses mouvements illustrés par la flèche en trait épais 14.

Bien entendu, l'invention n'est pas limitée au mode de réalisation décrit et on peut y apporter des variantes de réalisation sans sortir du cadre de l'invention tel que défini par les revendications.

En particulier, bien que la boucle 9 ait été illustrée sous forme d'une boucle en U dont la branche 12 a une extrémité repliée vers l'extérieur, on peut réaliser une boucle en U dont la branche externe n'est pas repliée ou est repliée vers l'intérieur. En disposant le connecteur 7 latéralement par rapport à l'extrémité 8 de l'aiguille 1 dans la position illustrée, on peut également réaliser une boucle en portion de cercle, la distance du connecteur par rapport à l'axe de pivotement 2 de l'aiguille étant calculé pour avoir un rayon de courbure approprié de la boucle formée par le ruban afin que le couple résistant réalisé par cette boucle ne soit pas trop important.

Bien que le coude 11 ait été décrit maintenu replié sur l'extrémité de l'aiguille par collage, il peut être maintenu dans cette position par tout autre moyen, par exemple en étant glissé sous une languette solidaire de l'aiguille.

## Revendications

1. Dispositif d'affichage comportant une aiguille (1) ayant une orientation variable par pivotement autour d'un axe (2) et portant un organe d'éclairage (5) relié à un connecteur (7) par un ruban flexible (6) replié sur lui-même pour former une boucle (9) ayant une branche (10) reliée à l'aiguille (1) et une branche (12) reliée au connecteur, dans lequel le ruban flexible (6) est fixé le long de l'aiguille (1), et **caractérisé en ce que** le ruban flexible (6) présente une portion en coude (11) rabattue sur une extrémité (8) de l'aiguille pour que la portion en coude (11) s'étende dans un même plan que la branche (10) reliée à l'aiguille, la boucle (9) étant une boucle en U.

2. Dispositif selon la revendication 1, **caractérisé en ce que** le connecteur (7) est décalé par rapport à l'aiguille (1) pour que la boucle (9) s'étende toujours d'un même côté de l'aiguille quelle que soit l'orientation de l'aiguille.

3. Dispositif selon la revendication 1, **caractérisé en ce que** la branche (12) reliée au connecteur a une extrémité (15) repliée vers l'extérieur de la boucle.

4. Dispositif selon la revendication 1, **caractérisé en ce que** le connecteur (7) est disposé à une distance de l'axe (2) suffisante pour réaliser un couple résistant sensiblement constant lors du pivotement de l'aiguille.

## Patentansprüche

1. Anzeigevorrichtung, umfassend einen Zeiger (1), der eine mittels Verschwenken um eine Achse (2) veränderliche Ausrichtung hat und ein Beleuchtungsorgan (5) trägt, das über ein flexibles Band (6) mit einem Verbinder (7) verbunden ist, wobei das Band auf sich selbst umgeschlagen ist, um eine Schlinge (9) zu bilden, die einen Zweig (10) hat, der mit dem Zeiger (1) verbunden ist, und einen Zweig (12), der mit dem Verbinder verbunden ist, wobei das flexible Band (6) entlang des Zeigers (1) fixiert ist, und **dadurch gekennzeichnet, dass** das flexible Band (6) einen abgeknickten Abschnitt (11) aufweist, der auf ein Ende (8) des Zeigers umgeklappt ist, damit sich der abgeknickte Abschnitt (11) in einer selben Ebene wie der Zweig (10) erstreckt, der mit dem Zeiger verbunden ist, wobei die Schlinge (9) eine U-förmige Schlinge ist.

2. Vorrichtung nach Anspruch 1, dadurch gekenntzeichnet, dass der Verbinder (7) in Bezug auf den Zeiger (1) versetzt ist, damit sich die Schlinge (9) unabhängig von der Ausrichtung des Zeigers immer auf einer selben Seite des Zeigers erstreckt.

3. Vorrichtung nach Anspruch 1, **dadurch gekennzeichnet, dass** der mit dem Verbinder verbundene Zweig (12) ein Ende (15) hat, das von der Schlinge nach außen umgelegt ist.

4. Vorrichtung nach Anspruch 1, **dadurch gekennzeichnet, dass** der Verbinder (7) in einem Abstand zur Achse (2) angeordnet ist, der ausreicht, um ein Widerstandsmoment zu erzeugen, das während des Verschwenkens des Zeigers im Wesentlichen konstant ist.

## Claims

1. A display device comprising a pointer (1) of orientation that is variable by pivoting about an axis (2) and carrying a lighting member (5) connected to a connector (7) by a flexible ribbon (6) folded in half to form a loop (9) having one branch (10) connected to the pointer (1) and one branch (12) connected to the connector, wherein the flexible ribbon (6) is secured along the pointer (1), and presents a bend portion (11) folded down over one end (8) of the pointer so that the bend portion (11) and the branch (10) connected to the pointer both extend in a common plane, the loop (9) being a U-shaped loop.

2. A device according to claim 1, **characterized in that** the connector (7) is offset relative to the pointer (1) so that the loop (9) always extends on the same side of the pointer regardless of the orientation of the pointer.

3. A device according to claim 1, **characterized in that** the branch (12) connected to the connector has one end (15) folded outwards from the loop.

4. A device according to claim 1, **characterized in that** the connector (7) is disposed at a distance from the axis (2) that is sufficient to ensure that during pivoting of the pointer a substantially constant level of opposing torque is applied thereto.
